# FASCICULE DE BREVET EUROPEEN

(11) **EP 4 232 695 B1**
(45) Date de publication et mention de la délivrance du brevet: **03.12.2025**
(21) Numéro de dépôt: 21810073.3
(22) Date de dépôt: 18.10.2021
(51) Int. Cl.: F01D 9/06, F01D 5/14, F02C 6/06, F02C 7/14

(54) **TURBORÉACTEUR À DOUBLE FLUX**
TURBOFAN-TRIEBWERK
TURBOFAN ENGINE

(30) Priorité: 22.10.2020 FR 2010841
(43) Date de publication de la demande: 30.08.2023
(73) Titulaire: SAFRAN AIRCRAFT ENGINES, 75015 Paris (FR)
(72) Inventeur: DE CARNÉ-CARNAVALET, Vincent Marie Jacques Rémi, 77550 MOISSY-CRAMAYEL (FR); MARTIN, Guillaume, Olivier, Vartan, 77550 MOISSY-CRAMAYEL (FR)
(74) Mandataire: Ernest Gutmann - Yves Plasseraud S.A.S.
(86) Numéro de dépôt international: PCT/FR2021/051808
(87) Numéro de publication internationale: WO 2022/084611

(56) Documents cités:
- EP-A2- 2 022 949
- EP-A2- 2 267 273
- US-A1- 2015 330 309

## Description

### Domaine technique de l'invention

L'invention concerne un turboréacteur à double flux, en particulier destiné à équiper un aéronef.

### Etat de la technique antérieure

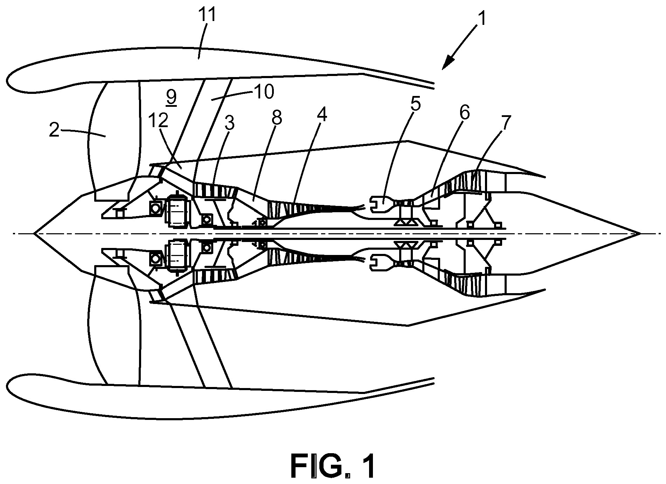

La figure 1 illustre un turboréacteur 1 à double flux de l'art antérieur, destiné à équiper en aéronef, en particulier un avion. Le turboréacteur 1 s'étend selon un axe X et comporte, d'amont en aval dans le sens de circulation des gaz, une soufflante 2, un compresseur basse pression 3, un compresseur haute pression 4, une chambre de combustion 5, une turbine haute pression 6 et une turbine basse pression 7. Les compresseurs basse et haute pression 3, 4, la chambre de combustion 5 et les turbines haute et basse pression 6, 7 sont situées dans une veine dite primaire 8.

Une veine 9 dite secondaire s'étendant autour de la veine primaire 8, en aval de la soufflante 2.

Une rangée annulaire d'aubes directrices 10 est située au niveau de la veine secondaire 9, ces aubes directrices 10 formant un aubage directeur de sortie ou O.G.V. (Outlet Guide Vane, en anglais). Les aubes directrices 10 s'étendant radialement entre une virole radialement externe 11 et un carter 12 entourant le compresseur basse pression 3.

Ces aubes directrices 10 ont pour la fonction de redresser le flux d'air circulant au travers de la veine secondaire 9. Elles peuvent également assurer une fonction structurale.

Par ailleurs, dans un turboréacteur à double flux, il est nécessaire de faire passer des équipements au travers de la veine secondaire, tels que servitudes, des canalisations, un arbre de transmission de puissance ou un pylône rattachant le turboréacteur à l'aéronef. Ces équipements traversent la veine secondaire en aval des aubes directrices et, afin de satisfaire des contraintes aérodynamiques, ces équipements sont généralement carénés dans une enveloppe profilée. Une telle enveloppe est appelée bifurcation, lorsque cette enveloppe s'étend jusqu'à l'extrémité aval de la veine secondaire, ou bras, dans le cas inverse.

Des prélèvements d'air peuvent être effectués dans la veine secondaire, dans laquelle circule de l'air froid. Ces prélèvements sont destinés à assurer le refroidissement de dispositifs de l'aéronef (refroidissement de l'air destiné à déboucher dans la cabine, refroidissement de l'air issu du compresseur haute pression et à destination de l'aéronef, ...), ou de dispositifs du turboréacteur (dispositif de refroidissement et de gestion des jeux de la turbine basse pression, ...). Afin d'effectuer de tels prélèvement, la veine secondaire peut comporter des écopes. Ces écopes peuvent être soit affleurantes, c'est-à-dire consister de simples ouverture dans les surfaces délimitant la veine secondaire, soit dynamiques, c'est-à-dire s'étendre au moins en partie dans la veine secondaire. Dans tous les cas, ces écopes sont équipées de vannes qui permettent de réguler ou de couper le débit d'air destiné au dispositif correspondant du turboréacteur.

Ces écopes sont des sources de pertes de charge, créant une augmentation de la consommation en carburant du turboréacteur. Par ailleurs, ces écopes peuvent être la source de remontées de pression potentielle de la veine froide jusqu'à la soufflante, provoquant une excitation aéroélastique, des nuisances acoustiques et une diminution du rendement moyen de la soufflante ainsi qu'une réduction de la marge au pompage. Ces écopes peuvent également être à l'origine de nuisances acoustiques supplémentaires par résonance de la cavité de l'écope, en particulier lorsque la vanne correspondante est fermée. Enfin, la multiplication des écopes et des conduits associés augmente la difficulté d'intégration ainsi que le nombre de pièces à fabriquer et monter au sein du turboréacteur.

Les documents EP 2 267 273 et US 2015/0330309 décrivent des turboréacteurs à double flux.

### Présentation de l'invention

L'invention vise à remédier à ces inconvénients, de manière simple, fiable et peu onéreuse.

A cet effet, l'invention concerne un turboréacteur à double flux comportant une veine primaire et une veine secondaire entourant la veine primaire, une rangée d'aubes directrices s'étendant dans la veine secondaire, en aval d'une soufflante, au moins une servitude s'étendant dans la veine secondaire en aval des aubes directrices et logée dans une enveloppe profilée, au moins une écope de prélèvement d'air située au niveau de l'enveloppe et équipée d'une vanne de régulation, caractérisé en ce qu'au moins une aube directrice située à proximité de l'enveloppe comporte une zone à géométrie variable et dont la géométrie peut être ajustée en fonctionnement.

Une telle caractéristique permet de modifier la forme, ou la cambrure, de l'aube directrice concernée et, ainsi, de réguler le débit et de contrôler la nature de l'écoulement au niveau de l'écope. Ceci permet de mieux s'adapter à la géométrie de l'écope et au débit d'air traversant la vanne, de façon à limiter les bruits et vibrations en fonctionnement et améliorer le rendement du turboréacteur.

L'ajustement peut être commandé à l'aide d'un actionneur, tel qu'un moteur ou un vérin.

Une aube directrice située à proximité de l'enveloppe est par exemple une aube directrice située circonférentiellement dans une plage angulaire comprise entre -40° et +40° par rapport à l'extrémité amont de l'enveloppe.

L'aube directrice à géométrie variable peut comporter au moins une zone apte à pivoter dont l'angle de pivot peut être commandé.

La zone apte à pivoter peut être une zone aval de ladite aube directrice.

L'enveloppe peut comporter une partie amont formant, au moins en partie, l'une des aubes directrices.

Une telle structure permet d'améliorer encore les performances du turboréacteur.

L'écope peut déboucher au niveau d'une surface de l'enveloppe, au niveau d'une ouverture, ladite ouverture étant située, au moins en partie, axialement en regard des aubes directrices. L'écope peut déboucher au niveau d'une surface de l'enveloppe, au niveau d'une ouverture, ladite ouverture étant située axialement en aval des aubes directrices.

L'écope peut déboucher au niveau de l'extrémité amont de l'enveloppe.

L'écope peut déboucher au niveau d'une surface d'intrados ou au niveau d'une surface d'extrados de l'enveloppe.

L'écope peut comporter un canal de circulation d'air, ladite écope comportant au moins une ailette située dans ledit canal de circulation d'air.

La présence de l'ailette permet d'améliorer le guidage du flux d'air au travers de l'écope.Le turboréacteur peut comporter une ou plusieurs écopes, pour une même enveloppe, par exemple une écope débouchant au niveau d'une surface intrados et une écope débouchant au niveau d'une surface extrados de l'enveloppe.

Ladite aube directrice peut être située à distance de l'enveloppe. En d'autres termes, ladite aube directrice comportant au moins une zone à géométrie variable est écartée de l'enveloppe suivant l'axe de la turbomachine.

L'invention peut également comporter un aéronef comportant un turboréacteur du type précité.

### Brève description des figures

[Fig. 1] est une vue en coupe longitudinale partielle d'un turboréacteur à double flux de l'art antérieur,
[Fig. 2] est une vue schématique d'une partie de la veine secondaire d'un turboréacteur selon une première forme de réalisation de l'invention,
[Fig. 3] est une vue correspondant à la figure 2, illustrant une autre position ou géométrie de l'aube directrice à géométrie variable,
[Fig. 4] est une vue schématique d'une partie de la veine secondaire d'un turboréacteur selon une deuxième forme de réalisation de l'invention.

### Description détaillée de l'invention

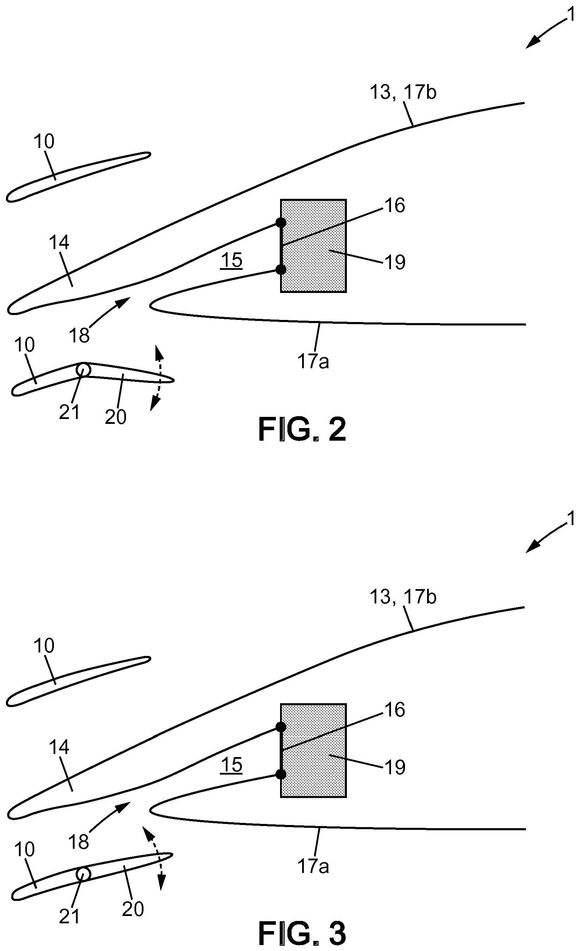

Les figures 2 et 3 illustrent une partie d'un turboréacteur 1 selon une première forme de réalisation de l'invention.

Celui-ci diffère du turboréacteur classique illustré à la figure 1 par les éléments décrit ci-après.

Comme précédemment, le turboréacteur 1 comporte une veine primaire 8 annulaire d'axe X et une veine secondaire 9 annulaire entourant la veine primaire 8, une rangée d'aubes directrices 10 s'étendant dans la veine secondaire 9, en aval de la soufflante 2. Au moins une servitude s'étend dans la veine secondaire en aval des aubes directrices 10 et est logée dans une enveloppe 13 profilée dont la partie amont 14 forme l'une des aubes directrices 10.

L'enveloppe 13 comporte au moins une écope de prélèvement d'air 15 équipée d'une vanne de régulation 16. L'écope est du type affleurante et débouche au niveau d'une surface d'intrados 17a de l'enveloppe 13, au niveau d'une ouverture 18, ladite ouverture 18 étant située, au moins en partie, axialement en regard des aubes directrices 10. L'écope alimente en air un dispositif 19, qui peut être un dispositif de l'aéronef (refroidissement de l'air destiné à déboucher dans la cabine, refroidissement de l'air issu du compresseur haute pression et à destination de l'aéronef, ...), ou un dispositif du turboréacteur (dispositif de refroidissement et de gestion des jeux de la turbine basse pression, ...).

L'une au moins des aubes directrices 10 située du côté de la surface d'extrados 17a de l'enveloppe 13 et située à proximité de l'enveloppe 13 est à géométrie variable et sa géométrie peut être ajustée.

En particulier, ladite aube directrice 10 comporte une zone aval 20 apte à pivoter autour d'un pivot 21, l'angle de pivot pouvant être ajusté à l'aide d'un actionneur, en fonction d'une loi de calage tenant compte des conditions de fonctionnement par exemple. La loi de calage peut notamment tenir compte du degré d'ouverture de la vanne 16 équipant l'écope 15 ou du débit d'air traversant l'écope 15.

L'actionneur est par exemple moteur ou vérin.

Une telle structure permet de modifier la forme, ou la cambrure, de l'aube directrice 10 concernée et, ainsi, de réguler le débit et de contrôler la nature de l'écoulement au niveau de l'écope 15. Les figures 2 et 3 représentent ainsi deux positions différentes de la zone apte à pivoter de l'aube directrice 10 concernée.

La figure 2 illustre par exemple le cas où la vanne 16 équipant l'écope 15 est fermée tandis que la figure 3 illustre le cas où cette vanne 16 est ouverte.

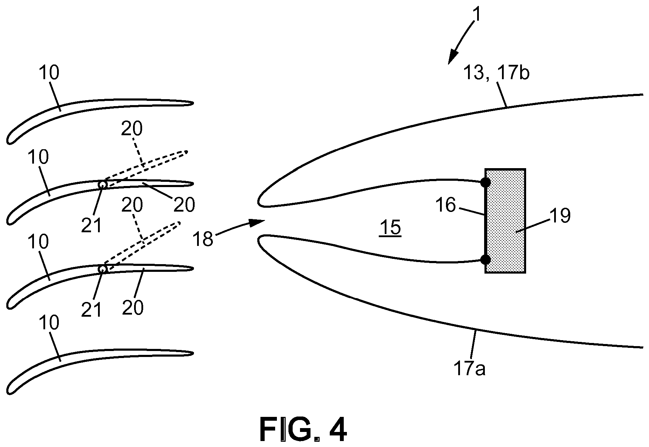

La figure 4 illustre une autre forme de réalisation de l'invention dans laquelle l'enveloppe 13 est distincte des aubes directrices 10 et est située en aval desdites aubes 10. L'écope 15 débouche au niveau de son ouverture 18 située au niveau de l'extrémité amont, également appelée bord d'attaque, de l'enveloppe 13.

Dans un tel cas, certaines des aubes directrices 10, ici les deux aubes les plus proches de l'ouverture, sont à géométrie variable, leur géométrie pouvant être ajustée à l'aide d'un ou de plusieurs actionneurs.

Comme précédemment, chacune de ces aubes directrices 10 comporte une zone aval 20 apte à pivoter autour d'un pivot 21, l'angle de pivot pouvant être ajusté à l'aide d'un actionneur, en fonction d'une loi de calage tenant compte des conditions de fonctionnement par exemple. La loi de calage peut notamment tenir compte du degré d'ouverture de la vanne 16 équipant l'écope 15 ou du débit d'air traversant l'écope 15.

La position illustrée en traits pleins illustre par exemple le cas où la vanne 16 équipant l'écope 15 est ouverte tandis que la position illustre en traits pointillés illustre le cas où la vanne 16 est fermée.

## Revendications

1. Turboréacteur (1)à double flux comportant une veine primaire (8) et une veine secondaire (9) entourant la veine primaire (8), une rangée d'aubes directrices (10) s'étendant dans la veine secondaire (9), en aval d'une soufflante (2), au moins une servitude s'étendant dans la veine secondaire (9) en aval des aubes directrices (10) et logée dans une enveloppe (13) profilée, au moins une écope (15) de prélèvement d'air située au niveau de l'enveloppe (13) et équipée d'une vanne (16) de régulation, **caractérisé en ce qu'**au moins une aube directrice (10) située à proximité de l'enveloppe (13) comporte une zone à géométrie variable (20) et dont la géométrie peut être ajustée en fonctionnement.

2. Turboréacteur (1) selon la revendication 1, **caractérisé en ce que** l'aube directrice (10) à géométrie variable comporte au moins une zone (20) apte à pivoter dont l'angle de pivot peut être commandé.

3. Turboréacteur (1) selon la revendication 2, **caractérisé en ce que** la zone (20) apte à pivoter est une zone aval de ladite aube directrice (10).

4. Turboréacteur (1) selon l'une des revendications 1 à 3, **caractérisé en ce que** l'enveloppe (13) comporte une partie amont (14) formant, au moins en partie, l'une des aubes directrices (10).

5. Turboréacteur (1) selon l'une des revendications 1 à 4, **caractérisé en ce que** l'écope (15) débouche au niveau d'une surface de l'enveloppe (13), au niveau d'une ouverture (18), ladite ouverture (18) étant située, au moins en partie, axialement en regard des aubes directrices (10).

6. Turboréacteur (1) selon l'une des revendications 1 à 4, **caractérisé en ce que** l'écope (15) débouche au niveau d'une surface (17a, 17b) de l'enveloppe (13), au niveau d'une ouverture (18), ladite ouverture (18) étant située axialement en aval des aubes directrices (10).

7. Turboréacteur (1) selon l'une des revendications 1 à 6, **caractérisé en ce que** l'écope (15) débouche au niveau de l'extrémité amont de l'enveloppe (13).

8. Turboréacteur (1) selon l'une des revendications 1 à 6, **caractérisé en ce que** l'écope (15) débouche au niveau d'une surface d'intrados (17b) ou au niveau d'une surface d'extrados (17a) de l'enveloppe (13).

9. Turboréacteur (1) selon l'une des revendications 1 à 8, **caractérisé en ce que** ladite aube directrice (10) est située à distance de l'enveloppe (13).

10. Aéronef comportant un turboréacteur (1) selon l'une des revendications 1 à 9.

## Patentansprüche

1. Turbofan-Triebwerk (1) mit einem Primärströmungskanal (8) und einem den Primärströmungskanal (8) umgebenden Sekundärströmungskanal (9), einer Reihe von Leitschaufeln (10), die im Sekundärströmungskanal (9) stromabwärts eines Gebläses (2) verlaufen, zumindest einer in dem Sekundärströmungskanal (9) stromabwärts der Leitschaufeln (10) verlaufenden und in einem profilierten Gehäuse (13) aufgenommenen Servoanlage, und zumindest einer an dem Gehäuse (13) angeordneten und mit einem Regelventil (16) versehenen Einbauchung (15) zur Luftzufuhr,
**dadurch gekennzeichnet, dass** zumindest eine in der Nähe des Gehäuses (13) angeordnete Leitschaufel (10) einen Bereich mit variabler Geometrie (20) aufweist, dessen Geometrie während des Betriebs angepasst werden kann.

2. Triebwerk (1) nach Anspruch 1,
**dadurch gekennzeichnet, dass** die Leitschaufel (10) mit variabler Geometrie zumindest einen verschwenkbaren Bereich (20) aufweist, dessen Schwenkwinkel steuerbar ist.

3. Triebwerk (1) nach Anspruch 2,
**dadurch gekennzeichnet, dass** der verschwenkbare Bereich (20) ein stromabwärtiger Bereich der Leitschaufel (10) ist.

4. Triebwerk (1) nach einem der Ansprüche 1 bis 3,
**dadurch gekennzeichnet, dass** das Gehäuse (13) einen stromaufwärtigen Abschnitt (14) aufweist, der zumindest teilweise eine der Leitschaufeln (10) bildet.

5. Triebwerk (1) nach einem der Ansprüche 1 bis 4,
**dadurch gekennzeichnet, dass** die Einbauchung (15) an einer Fläche des Gehäuses (13) im Bereich einer Öffnung (18) mündet, wobei die Öffnung (18) zumindest teilweise den Leitschaufeln (10) axial gegenüberliegt.

6. Triebwerk (1) nach einem der Ansprüche 1 bis 4,
**dadurch gekennzeichnet, dass** die Einbauchung (15) an einer Fläche (17a, 17b) des Gehäuses (13) im Bereich einer Öffnung (18) mündet, wobei die Öffnung (18) axial stromabwärts der Leitschaufeln (10) liegt.

7. Triebwerk (1) nach einem der Ansprüche 1 bis 6,
**dadurch gekennzeichnet, dass** die Einbauchung (15) am stromaufwärtigen Ende des Gehäuses (13) mündet.

8. Triebwerk (1) nach einem der Ansprüche 1 bis 6,
**dadurch gekennzeichnet, dass** die Einbauchung (15) an einer Unterseite (17b) oder an einer Oberseite (17a) des Gehäuses (13) mündet.

9. Triebwerk (1) nach einem der Ansprüche 1 bis 8,
**dadurch gekennzeichnet, dass** die Leitschaufel (10) in einem Abstand vom Gehäuse (13) angeordnet ist.

10. Luftfahrzeug mit einem Triebwerk (1) nach einem der Ansprüche 1 bis 9.

## Claims

1. A turbojet engine (1) including a primary duct (8) and a secondary duct (9) surrounding the primary duct (8), a row of guide vanes (10) extending in the secondary duct (9), downstream of a fan (2), at least one servo extending in the secondary duct (9) downstream of the guide vanes (10) and housed in a profiled casing (13), at least one air sampling scoop (15) located at the casing (13) and equipped with a regulation valve (16), **characterized in that** at least one guide vane (10) located proximate to the casing (13) includes a variable-geometry zone (20) and whose geometry can be adjusted during operation.

2. The turbojet engine (1) according to claim 1, **characterized in that** the variable-geometry guide vane (10) includes at least one pivotable zone (20) whose pivot angle can be controlled.

3. The turbojet engine (1) according to claim 2, **characterized in that** the pivotable zone (20) is a zone downstream of the said guide vane (10).

4. The turbojet engine (1) according to one of claims 1 to 3, **characterized in that** the casing (13) includes an upstream portion (14) forming, at least partially, one of the guide vanes (10).

5. The turbojet engine (1) according to one of claims 1 to 4, **characterized in that** the scoop (15) opens out at a surface of the casing (13), at one opening (18), said opening (18) being located, at least partially, axially opposite the guide vanes (10).

6. The turbojet engine (1) according to one of claims 1 to 4, **characterized in that** the scoop (15) opens out at a surface (17a, 17b) of the casing (13), at one opening (18), said opening (18) being located axially downstream of the guide vanes (10).

7. The turbojet engine (1) according to one of claims 1 to 6, **characterized in that** the scoop (15) opens out at the upstream end of the casing (13).

8. The turbojet engine (1) according to one of claims 1 to 6, **characterized in that** the scoop (15) opens out at an intrados surface (17b) or at an extrados surface (17a) of the casing (13).

9. The turbojet engine (1) according to one of claims 1 to 8, **characterized in that** the said guide vane (10) is located at a distance from the casing (13).

10. An aircraft including a turbojet engine (1) according to one of claims 1 to 9.
